# EUROPEAN PATENT SPECIFICATION

(11) **EP 3 178 356 B1**
(45) Date of publication and mention of the grant of the patent: **09.01.2019**
(21) Application number: 16203314.6
(22) Date of filing: 09.12.2016
(51) Int. Cl.: A47J 31/44

(54) **HYGIENICAL GUARANTEE SYSTEM TO SUPPLY LIQUID FROM A TANK OF AN INSTANT BEVERAGE VENDING MACHINE**
HYGIENEGARANTIESYSTEM ZUR ABGABE VON FLÜSSIGKEIT AUS EINEM TANK EINES GETRÄNKEVERKAUFSAUTOMATEN
SYSTÈME DE GARANTIE HYGIÉNIQUE POUR FOURNIR DU LIQUIDE À PARTIR D'UN RÉSERVOIR D'UN DISTRIBUTEUR DE BOISSONS INSTANTANÉES

(30) Priority: 10.12.2015 IT UB20156834
(43) Date of publication of application: 14.06.2017
(73) Proprietor: Tateo, Fernando Gabriele Giorgio, 20125 Milano (IT)
(72) Inventor: Tateo, Fernando Gabriele Giorgio, 20125 Milano (IT)
(74) Representative: Negrini, Elena

(56) References cited:
- GB-A- 2 212 791
- US-A1- 2009 283 467

## Description

The present invention refers to the field of hygienical guarantee systems to supply from a tank liquids assigned to instant beverages vending machines.

Document US-A-2009/0283467 discloses a tank for a beverage vending machine. Tanks for vending machines that have a passage for the supply of liquids are known, these tanks have usually only a mouthpiece for the outlet of the liquids. To allow the leakage of the liquids from such mouthpiece usually the caps are unscrewed, or such caps are equipped with a hole for air pressure compensation inside the tank.

The known tanks do not have filters intended to prevent liquid contamination in which these liquids are contained and the compensation holes on the caps also allow the inlet of pollutants into the tank, no longer guaranteeing hygiene in such equipment.

The main disadvantages of current tanks for instant preparation beverages is the lack of filters assigned to the limitation of the contamination of the inlet of the liquids. Another disadvantage of the known tanks is the presence of a single mouthpiece for the inlet and for the outlet of liquids.

One purpose of the present invention is to propose hygienical guarantee system to supply from a tank liquids assigned to instant beverages vending machines with filters assigned to limit the contamination of liquids.

Another purpose of the present invention is to propose hygienical guarantee system to supply from a tank liquids assigned to instant beverages vending machines with two separate passages one assigned to the drawing of liquids, and the other assigned to the compensation of the inner pressure.

The characteristics of the invention are described below with particular reference to the attached drawings in which:

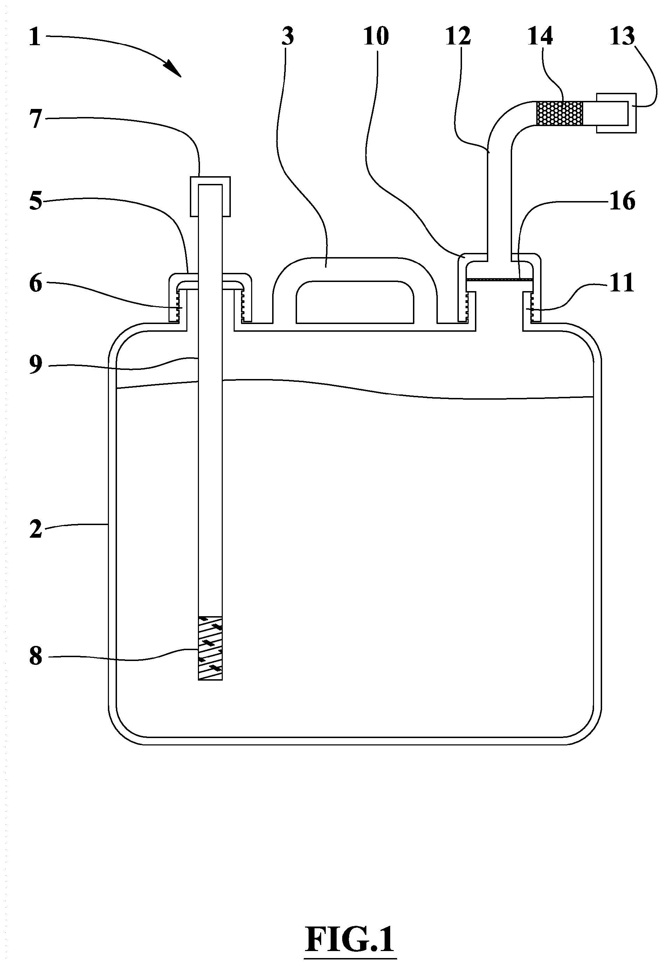

- Figure 1 shows a sectional view of the system 1 subject of the present invention.

With reference to figure 1, 1 indicates the hygienical guarantee system to supply from a tank liquids assigned to instant beverages vending machines, subject of the present invention.

Such system is used to maintain the maximum of hygiene of the liquids assigned to vending machines, such liquids are usually treated with ionisation and made drinkable, so as to guarantee the maximum of hygiene possible.

The system is equipped with a watertight container 2 which has at least one first inlet 6 equipped with one first cap 5 equipped with one first tube 9 assigned to draw the liquids contained in the container itself.

System 1 includes a second inlet 11 equipped with a second cap 10 having a second tube 12 for the inlet, in the watertight container, of the air necessary to compensate the volume of the liquid taken from the watertight container itself along the first tube 9.

Such second tube 12 is equipped with a filter 14 for inlet air filtration inside the hermetic container so as to avoid the entrance of dusts.

The second cap 10 is equipped with an ultrafiltration membrane 16.

The filter 14 and the membrane 16 are transversally arranged to the second tube 12 and the second cap 10 to intercept all inlet air flow.

Said membrane 16 which is semipermeable is equipped with very small pores (on average having diameter between 1 - 100 nm).

The more the size of the membrane holes is reduced, the more will be higher the pressure drop to overcome and the more will be higher the filtration of biological and/or pathogenic agents delivered from the compensation air, so as to avoid contamination of the liquids which are in the watertight container.

The first tube 9, which passes through the cap 5, connects the inner part of the watertight container 2 with the outer part and penetrates into the container up to a predetermined distance from the respective bottom acting as a drawing tube for the liquids which are contained in the watertight container 2. The end of the tube 9 which is outside the container has a first little cap 7 assigned to the closure and assigned to the prevention of the outlet and the contamination of the liquids which are inside the tank during carriage, and the end of the first tube 9 which is inside the watertight container 2 has a particle filter 8, to avoid the drawing of the particles which are in the tank. When the tank has to be installed in the vending machine, the first little cap 7 is removed from the tube 9 which will be connected to the drawing pump of the vending machine so that it is possible to prepare drinks with the liquid, which usually consist of ozonized water, present in the watertight container 2.

During the carriage phase of the watertight container 2, the second inlet 11 is closed in the factory with an hermetic cap or seal so as to guarantee the hygiene of the liquid, during the installation phase such hermetic cap or seal is removed to install the second cap 10 with the membrane 16 and the respective second tube 12 equipped with the filter 14. The end of said second tube 12 assigned to be placed externally the watertight container, is equipped with a second little cap 13 assigned to protection which is removed at the time of installation.

The ultrafiltration membrane 16 is placed through the lumen of the second cap 10 before its portion assigned to engage the second inlet 11, so as to exploit the biggest filter surface possible and to avoid the contact of such membrane with the liquids which are in the watertight container, it is also possible to arrange the ultrafiltration membrane 16 downstream or upstream of the cap 10 with appropriate retention systems.

Alternatively, the system provides for both of the first 5 and second cap 10 with the respective first 9 and second tube 12, the first little cap 7 and the second little cap 13, the filter 14 and the membrane 16 are sterilized in the factory and packaged in two separate kits so as to be sterile; such packaged elements are applied to the watertight container at the time of its filling and/or at the time of installation. Then it will be possible to carry the hermetic container 2 up to the vending machine with two caps or provisional hermetic seals so as to ensure the hygiene of liquid at the time of installation phase such caps will be removed and the respective first 5 and second 10 caps will be placed, or as described previously, the first cap 5 can be installed in factory affixing a first little cap 7 assigned to closure.

The inlets first 6 and second 11 of the watertight container and the respective first 5 and second 10 caps are preferably of the screw type and such inlets are placed in the upper zone of the container near of a handle 3 assigned to facilitate the handling and connection operations of the container with the machine and to maintain such upper area far from any contamination due to contact with the ground.

An advantage of the present invention is to provide the hygienical guarantee system to supply from a tank liquids assigned to instant beverages vending machines with filters assigned to reduction of contamination of the liquids.

Another advantage of the present invention is to provide hygienical guarantee system to supply from a tank liquids assigned to instant beverages vending machines with two separate passages one assigned to the drawing of the liquids, and the other assigned to the internal pressure compensation.

## Claims

1. Hygienical guarantee system to supply liquids from a tank of the system for instant beverages vending machines, said tank is equipped with a sealed container (2) having at least a first inlet (6) for a first cap (5) having a first tube (9) for the suction of the liquids; said system (1) being **characterized in that** it comprises a second inlet (11) for a second cap (10) having a second tube (12) for the air pressure compensation inside the container (2); this second tube (12) is provided with at least one filter (14) for the air filtration and said second cap (10) is provided with an ultrafiltration membrane (16) to prevent the contamination of the liquid in the sealed container (2) by biological agents and/or pathogenic adducts from the compensation air.

2. System according to claim 1 **characterized in that** the first tube (9) passes through the cap (5), connecting the inside of the sealed container (2) with the outside and penetrates inside the container up to a predetermined distance from the respective bottom acting as a suction pipe for the liquid contained in the sealed container (2).

3. System according to claim 2 **characterized in that** the end of the first tube (9) outside to the sealed container (2) has a first removable plug (7); the end of the second tube (12) outside to the sealed container (2) has a second removable plug (13); said plugs (7, 13) are assigned to prevent the contamination of the liquid during the transport phase or installation of the tank in the vending machine phase.

4. System according to claim 1 **characterized in that** the ultrafiltration membrane (16) is placed in the lumen of the portion of the second cap (10) assigned to be engaged or engaged in the second inlet (11).

5. System according to any of the previous claims **characterized in that** the first (5) and second (10) caps with the respective tubes first (9) and second (12), the respective plugs first (7) and second (13), the filter (14) and the membrane (16) are sterilized before installation on the tank.

6. System according to claim 5 **characterized in that** each cap first (5) or second (10) with the respective tube first (9) or second (12), with the respective plug first (7) or second (13) and, in the case of the second cap, with the filter (14) and the membrane (16) is put in a respective sterile bag adapted to keep it sterile at least before the fixing to the container.

7. System according to any of the previous claims **characterized in that** the first inlet (6) is closed by the first cap (5), with the respective first tube (9), in the factory or following the filling of the container and the respective first plug (7) prevents the liquid discharge and the entry of pollution during the transport and must be removed for installation.

8. System according to any of the previous claims **characterized in that** the second inlet (11) is closed with a cap or with a seal to prevent the accidental discharge of the liquid contained in the container during the transport, the second cap (10) with the second tube (12), the filter (14) and the membrane (16) are contained in a respective separate sterile envelope.

9. System according to any of the previous claims **characterized in that** the first and second caps (5, 10) and the inlet first (6) and second (11) are of the screw type, and a handle (3) of the container is placed between them.

10. System according to any of the previous claims **characterized in that** the end of the first tube (9) inside the sealed container (2) has a particle filter (8).

## Patentansprüche

1. Hygienegarantiesystem zur Abgabe von Flüssigkeiten aus einem Tank eines Systems für Verkaufsautomaten für Fertiggetränke, wobei der Tank mit einem abgedichteten Behälter (2) ausgestattet ist, der mindestens einen ersten Einlass (6) für einen ersten Verschluss (5) mit einem ersten Schlauch (9) zum Ansaugen der Flüssigkeit aufweist;
das System (1) ist **dadurch gekennzeichnet, dass** es einen zweiten Einlass (11) für einen zweiten Verschluss (10) mit einem zweiten Schlauch (12) aufweist, um den Luftdruck innerhalb des Behälters (2) auszugleichen; wobei dieser zweite Schlauch (12) mit mindestens einem Filter (14) zum Filtern der Luft ausgestattet ist und wobei der zweite Verschluss (10) mit einer Ultrafiltrationsmembran (16) ausgestattet ist, um eine Verunreinigung der Flüssigkeit im abgedichteten Behälter (2) durch biologische Mittel und/oder pathogene Addukte aus der Zuluft zu verhindern.

2. System gemäß Anspruch 1, **dadurch gekennzeichnet, dass** der erste Schlauch (9) durch den Verschluss (5) führt, wobei er die Innenseite des abgedichteten Behälters (2) mit der Außenseite verbindet und in den Behälter von der entsprechenden Unterseite bis zu einer vorgegebenen Entfernung eindringt, um als Saugleitung für die im abgedichteten Behälter enthaltene Flüssigkeit zu agieren.

3. System gemäß Anspruch 2, **dadurch gekennzeichnet, dass** das Ende des ersten Schlauchs (9) außerhalb des abgedichteten Behälters (2) einen ersten herausnehmbaren Stopfen (7) aufweist; und dass das Ende des zweiten Schlauchs (12) außerhalb des abgedichteten Behälters einen zweiten herausnehmbaren Stopfen (13) aufweist; wobei die Stopfen (7; 13) vorgesehen sind, um die Verunreinigung der Flüssigkeit während der Transport- oder der Installationphase des Tanks im Verkaufsautomaten zu verhindern.

4. System gemäß Anspruch 1, **dadurch gekennzeichnet, dass** die Ultrafiltrationsmembran (16) im Hohlraum des Abschnitts des zweiten Verschlusses (10) befestigt ist, der vorgesehen ist, um damit in Eingriff zu gelangen oder um in den zweiten Einlass (11) einzugreifen.

5. System gemäß einem der vorhergehenden Ansprüche, **dadurch gekennzeichnet, dass** der erste (5) und der zweite Verschluss (10) mit dem entsprechenden ersten (9) und zweiten Schlauch (12), dem entsprechenden ersten (7) und zweiten Stopfen (13), dem Filter (14) und der Membran (16) vor der Installation im Tank sterilisiert werden.

6. System gemäß Anspruch 5, **dadurch gekennzeichnet, dass** jeder erste (5) oder zweite Verschluss (10) mit dem entsprechenden ersten (9) und zweiten Schlauch (12), mit dem entsprechenden ersten (7) und zweiten Stopfen (13) und, in Bezug auf den zweiten Verschluss, mit dem Filter (14) und der Membran (16) in einem entsprechenden sterilen Beutel verpackt wird, der angepasst ist, um ihn zumindest vor der Befestigung an den Behälter steril zu halten.

7. System gemäß einem der vorhergehenden Ansprüche, **dadurch gekennzeichnet, dass** der erste Einlass (6) vom ersten Verschluss (5) verschlossen wird; wobei der entsprechende erste Schlauch (9) in der Fabrik oder nach dem Befüllen des Behälters und des entsprechenden ersten Stopfens (7) ein Auslaufen der Flüssigkeit und den Eintritt von Verschmutzung während des Transports verhindert und für die Installation entfernt werden muss.

8. System gemäß einem der vorhergehenden Ansprüche, **dadurch gekennzeichnet, dass** der zweite Einlass (11) mit einem Verschluss oder einer Dichtung verschlossen ist, um ein unbeabsichtigtes Auslaufen der im Behälter enthaltenen Flüssigkeit während des Transports zu verhindern, wobei der zweite Verschluss (10) zusammen mit dem zweiten Schlauch (12), dem Filter (14) und der Membran (16) in einer entsprechenden separaten sterilen Hülle enthalten sind.

9. System gemäß einem der vorhergehenden Ansprüche, **dadurch gekennzeichnet, dass** der erste und der zweite Verschluss (5, 10) und der erste (6) und der zweite Einlass (11) gewindeartig ausgeführt sind und zwischen ihnen ein Griff (3) des Behälters angebracht ist.

10. System gemäß einem der vorhergehenden Ansprüche, **dadurch gekennzeichnet, dass** das Ende des ersten Schlauchs innerhalb des abgedichteten Behälters (2) einen Partikelfilter (8) aufweist.

## Revendications

1. Système de garantie hygiénique pour fournir des liquides à partir d'un réservoir du système pour des distributeurs de boissons instantanées, ledit réservoir est équipé d'un contenant scellé (2) ayant au moins une première entrée (6) pour un premier capuchon (5) ayant un premier tube (9) pour l'aspiration des liquides ; ledit système (1) étant **caractérisé par le fait qu'**il comprend une seconde entrée (11) pour un second capuchon (10) ayant un second tube (12) pour la compensation de pression d'air à l'intérieur du contenant (2) ; ledit second tube (12) comporte au moins un filtre (14) pour la filtration d'air et ledit second capuchon (10) comporte une membrane d'ultrafiltration (16) pour empêcher la contamination du liquide dans le contenant scellé (2) par des agents biologiques et/ou des adduits pathogènes provenant de l'air de compensation.

2. Système selon la revendication 1, **caractérisé par le fait que** le premier tube (9) passe à travers le capuchon (5), reliant l'intérieur du contenant scellé (2) avec l'extérieur, et pénètre à l'intérieur du contenant jusqu'à une distance prédéterminée par rapport au fond respectif, servant de tuyau d'aspiration pour le liquide contenu dans le contenant scellé (2).

3. Système selon la revendication 2, **caractérisé par le fait que** l'extrémité du premier tube (9) à l'extérieur du contenant scellé (2) a un premier bouchon amovible (7) ; l'extrémité du second tube (12) à l'extérieur du contenant scellé (2) a un second bouchon amovible (13) ; lesdits bouchons (7, 13) sont destinés à empêcher la contamination du liquide pendant la phase de transport ou la phase d'installation du réservoir dans le distributeur.

4. Système selon la revendication 1, **caractérisé par le fait que** la membrane d'ultrafiltration (16) est placée dans la lumière de la partie du second capuchon (10) engagée ou destinée à être engagée dans la seconde entrée (11) .

5. Système selon l'une quelconque des revendications précédentes, **caractérisé par le fait que** les premier (5) et second (10) capuchons avec les premier (9) et second (12) tubes respectifs, les premier (7) et second (13) bouchons respectifs, le filtre (14) et la membrane (16) sont stérilisés avant installation sur le réservoir.

6. Système selon la revendication 5, **caractérisé par le fait que** chaque capuchon, premier (5) ou second (10), avec le premier (9) ou second (12) tube respectif, avec le premier (7) ou second (13) bouchon respectif et, dans le cas du second capuchon, avec le filtre (14) et la membrane (16), est placé dans une poche stérile respective adaptée pour le maintenir stérile au moins avant la fixation au contenant.

7. Système selon l'une quelconque des revendications précédentes, **caractérisé par le fait que** la première entrée (6) est fermée par le premier capuchon (5), avec le premier tube respectif (9), à l'usine ou à la suite du remplissage du contenant, et le premier bouchon respectif (7) empêche le refoulement de liquide et l'entrée de pollution pendant le transport et doit être retiré pour l'installation.

8. Système selon l'une quelconque des revendications précédentes, **caractérisé par le fait que** la seconde entrée (11) est fermée avec un capuchon ou un opercule pour empêcher le refoulement accidentel du liquide contenu dans le contenant pendant le transport, le second capuchon (10) avec le second tube (12), le filtre (14) et la membrane (16) sont contenus dans une enveloppe stérile distincte respective.

9. Système selon l'une quelconque des revendications précédentes, **caractérisé par le fait que** les premier et second capuchons (5, 10) et les première (6) et seconde (11) entrées sont du type à vis, et une poignée (3) du contenant est placée entre eux.

10. Système selon l'une quelconque des revendications précédentes, **caractérisé par le fait que** l'extrémité du premier tube (9) à l'intérieur du contenant scellé (2) a un filtre à particules (8).
